Europäisches Patentamt

European Patent Office   (11) Publication number:  **0 045 522**

Office européen des brevets   **A2**

(12)  # EUROPEAN PATENT APPLICATION

(21) Application number: **81106145.6**

(22) Date of filing: **05.08.81**

(51) Int. Cl.³: **A 23 G 9/28**
**A 23 G 3/20, A 23 P 1/00**

(30) Priority: **05.08.80 US 175374**
**12.05.81 US 263094**

(43) Date of publication of application:
**10.02.82 Bulletin 82/6**

(84) Designated Contracting States:
**AT BE CH DE FR GB IT LI LU NL SE**

(71) Applicant: **MARYLAND CUP CORPORATION**
**10100 Reisterstown Road**
**Owings Mills Maryland 21117(US)**

(72) Inventor: **Rubenstein, Irving H.**
**38 Caveswood Lane**
**Owings Mills Maryland 21117(US)**

(72) Inventor: **Bank, Herbert M.**
**Baronet Road**
**Owings Mills Maryland 21117(US)**

(74) Representative: **Barz, Peter**
**Patentanwaltsbüro Dr. Peter Barz Siegfriedstrasse 8**
**D-8000 München 40(DE)**

(54) Edible food containers and the method and apparatus for coating said containers.

(57) Edible food containers are processed for use with a food product by applying a barrier coating composition to at least the interior surface thereof. The barrier coating composition comprises a sugar solution having a sugar content of at least 50% by weight and optionally containing other ingredients such as a flavor-producing material or a vegetable gum. In another embodiment a moisture resistant barrier coating composition comprising a food grade fat, food grade modified fats or mixtures thereof is used.

Disclosed are also methods and continuous methods for applying the coating material to the edible food container as well as apparatus suited for carrying out said methods and continuous methods.

The present invention relates to edible food containers containing a moisture-proof, food grade, barrier coating and to a method and apparatus of applying said barrier coating to at least one surface of an edible food container. More particularly, the present invention is directed to the application of a sugar syrup barrier coating composition on the one hand and a food grade fats on the other hand to edible food containers.

Edible food containers are containers which are used to handle and dispense a number of different kinds of food items, for example dessert type food products such as ice cream, custards, etc., and the non-dessert type food products such as Chinese food, Mexican food, and the like. Such containers are desirable because they can be consumed simultaneously with or after the consumption of the food product itself.

It is a common practice to utilize edible food containers such as ice cream cones to dispense frozen or semi-frozen ice cream products. Such cones can be manufactured by two basic methods.

One of the methods is concerned with the manufacture of molded cones which involves depositing a semi-fluid batter consisting of such ingredients as water, flour, sugar, shortening, leavening, lecithin and flavor into a mold. After the batter is disposed in the mold, a core is inserted into the mold so that the batter is forced to assume the shape of the space provided between the core and the mold. As a result, it is possible to mold cones of a conical shape or cups of various sizes and configurations. Once the core of the mold is joined with the batter, the molds are subjected to heat for an appropriate length of time, at which point the cores are removed, the molds
are broken open and the cones are discharged onto a conveyor
for possible trimming and for packing.

This process of molding cones has certain limitations.
The ratio of sugar to flour must necessarily be small since sugar
causes the cones to stick to the molds. Optimum operations
generally involve using less than six percent sugar, based on the
weight of the flour. Some ovens used for the manufacture of
molded cones have been modified, for example, by changing the
configuration of the cones and the method used for the molds,
in order to provide cones with larger amounts of sugar, for
example as much as 35 percent, based on the weight of the flour.
Unfortunately, there are certain drawbacks with this procedure.
It is axiomatic in the industry that the higher the sugar content,
the more that carmelization takes place on the molds and the more
frequent is the need to clean the molds. Since the cleaning of
the molds is a laborious process involving removing the molds
from the ovens, it has not been economically feasible to use a
high ratio of sugar to flour in a molded cone. Cleaning the
molds does not completely solve the problem of making a satisfactory product for even slight sticking can destroy the sidewall
of the cone and make an unsaleable product. As a result, low
level sugars are used so that the resulting container is a bland
but pleasant complement to ice cream.

The second method for the manufacture of ice cream cones
is based on the principle of baking a flat waffle between two
plates to make the so-called sugar roll cone. The resulting
product which is a flat sheet with an inscribed surface on the
top thereof, is picked up mechanically and transferred to a
piece of equipment that rolls the flat waffle into the conical shape we recognize as an ice cream cone. The phenomenon that permits this rolling process is the transformation, during the baking process, of crystalline sugar into its fluid state, since during the baking operation, the waffle reaches a temperature in excess of 300°F (149°C). To bake such a cone requires a concentration of sugar of from 20-50% or even higher, based on the weight of the flour, to provide the plasticity for the hot waffle to be rolled to the necessary shape. However, there is a problem with the pliability of the waffle, for if the waffle is too soft it is very difficult to pick up mechanically and roll. Also, once the cone has been rolled, it must not lose its shape and become "out of round" when it is dropped onto a conveyor while it is still hot and the sugar has not yet had a sufficient time to crystallize. Making a good cone is both the function of the temperature of the cone as it is discharged from the rolling mechanism and the amount of sugar in the formula. Some ovens permit, and even need, higher sugar levels than others so that the physical limitations of the oven often dictate the formula that can be used. The above mentioned factors are characteristic of industry practices.

When it is desired to add flavor and moisture resistance to cones, the cones are often put through chocolate enrobers wherein either pure chocolate coating containing cocoa butter or a compound coating which is a mixture of cocoa and vegetable fats is applied to the cone to enclose the cone in a flavored fat-base material. The problem with this technique is that great care must be exercised in the handling and shipping of cones during warm weather, for obviously the coating will melt during extreme shipping temperatures which can reach as high as 140°F (60°C) in a railroad boxcar. If a fat or a higher melting point material is used to compensate for this problem, it has been found that the eating qualities of the finished cone are adversely affected inasmuch as the high melting point fats have an unpleasant, waxy feel to the mouth.

Since many of the cones manufactured by the methods discussed above have a bland taste, as a result of a low sugar content, they are equally adaptable or can be readily adaptable for use with unsweetened, non-dessert type food products such as Chinese food, Mexican food and other related food products. However, irrespective of the type of food product which is used in conjunction with the edible food container, it is important that such containers not only possess good strength but also contain a resistance to moisture penetration by liquids which are present in both frozen and nonfrozen food products. Thus, for example, after ice cream cones, either molded or rolled are baked, there are intrinsic problems in handling, shipping and finally serving the cones. Ice cream cones are, by their very nature, fragile containers, so that great care must be taken to pack these products in materials which will protect them against breakage as they travel from the bakery to the warehouses and ultimately to the user. When the cones arrive at their destination they must be strong enough to accept the pressure of a dipped ball of frozen food product, for example, ice cream, when it is placed on the top of the cone. An operator dispensing ice cream must, of necessity, be sure that the ice cream sufficiently adheres to the cone. Thus, a degree of pressure is necessary to force the ball of ice cream onto the rim of the cone. Either because of a lack of skill of the operator or the inherent weakness of the cone there is the constant problem of the cone breaking in the process. As a result, it has long been an objective of the ice cream cone manufacturers to find a method of increasing the strength of the cone.

Sugar roll cones and to some extent molded cones are frequently used for prepacking ice cream rather than for handling ice cream at the point of service. When ice cream cones are prepacked and the combined ice cream and cone are stored in a freezer, the cone tends to absorb moisture from the ice cream. In addition, any snow or condensation that has deposited on the outside of the cone during storage melts upon exposure to ambient temperatures which further contributes to a soggy cone. Ice cream, as it is extruded from a freezer in the form of soft ice cream at a temperature of from 19° to 26°F (-7 to -3°C) contains only about 30% of its water in the form of ice, while the remaining portion of the water is simply trapped in the matrix of the ice cream. The freezing of most of the remaining water in a storage area can take anywhere from one hour to forty-eight hours, depending on whether the ice cream factory has a fast freeze tunnel or relies on normal freezer temperatures of anywhere from -40 to -10°F (-40 to -23°C) to accomplish this purpose. Because of this time lag in freezing the ice cream, the free water is often absorbed by the cone causing a soggy mass since there is no liquid or water barrier which exists between the cone and the ice cream. Mechanisms have been developed to spray cones with chocolate coating just prior to the dispensing of the ice cream into the cone from a filling machine. Unfortunately, spraying has been found to deposit a multiple series of droplets on the inside surface of the cone so there is the possibility of uncoating the surfaces between the particles of chocolate coating. These

uncoated surface areas provided a "pathway" for moisture to penetrate the cone and eventually render soggy the baked portion disposed behind the coating.

Similar problems are experienced when non-dessert type food products such as Chinese food, Mexican food and the like are placed in cone-type edible food containers. The liquid portion of the food product is readily absorbed by the container causing the container to become soggy and difficult to handle. Thus, it is necessary to provide edible food containers with sufficient strength to resist breaking during manufacture, shipment, handling and use and also to provide containers with a resistance to moisture penetration by the food product which is introduced into the food container.

Accordingly, an object of the present invention is to provide edible food containers and a method for coating edible food containers to provide them with increased moisture resistance.

Another object of the present invention is to provide improved edible food containers which are effective in holding a plurality of both hot and cold food products without absorbing or otherwise being adversely effected by the food product.

Another object of the present invention is to provide edible food containers which possess improved resistance to liquid absorption, and as such are effective in holding and dispensing a variety of both hot and cold food products.

A further object of the present invention is to provide a method for coating an edible food container so that the container possesses increased strength and, as such, substantially reduces damage caused to the containers during manufacture, storage, packing and use.

Still another object of the present invention is to provide edible food containers which can be used to hold and dispense a variety of food products, such as for example, ice cream, jello, pudding, desserts, Chinese food and the like.

Yet another object of the present invention is to provide edible food containers which possess increased sweetness, particularly containers used for jello, pudding, desserts and the like.

A still further object of the present invention is to provide edible food containers which possess a flavor which is compatible with the contents to be dispensed therein.

Yet another object of the present invention is to provide edible food containers and a method for producing edible food containers which contains a barrier coating of substantially uniform thickness disposed on at least one of the surfaces thereof to achieve increased strength, and/or increased moisture resistance, and/or improved flavor and/or increased sweetness of the food containers.

An additional object of the present invention is to provide an improved method and apparatus for applying a liquid barrier coating to at least one surface of an edible food container.

Other objects and further scope of applicablity of the present invention will become apparent from the detailed description given hereinafter. It should be understood, however, that the detailed description and specific examples, while indicating preferred embodiments of the invention, are given by way of illustration only, since various changes and modifications within the spirit and scope of the invention will become apparent to those skilled in the art from this detailed description.

Pursuant to the present invention, the above-identified disadvantages have been eliminated and a new and improved barrier coating composition for edible food containers, as well as an improved method and apparatus for applying the barrier coating to at least one surface of edible food containers have been developed which achieve the objects of the present invention.

When considering edible food containers for dessert-type food products such as ice cream, jello, pudding, and the like, a barrier coating in the form of a continuous film is applied to the food container, such as for example, a molded cone or a rolled sugar cone. Advantageously, the barrier coating is applied to the inside surface of the edible food container so as to protect the container from undue moisture contributed by the food product which would otherwise be absorbed by the food container. It can be understood that where additional strength is desired, the outside surface of the food container can also be provided with a barrier coating.

In connection with barrier coatings for dessert-like food products such as ice cream, the barrier coating can comprise a sugar solution having a sugar content of about 50% by weight. However, as a practical matter, because of the energy demands and other process limitations required to eliminate the large amount of water in such a solution, higher sugar contents have been found to be more effective. Thus, the barrier coating composition advantageously contains a higher sugar content, for example, a sugar syrup of about 80 to 86% by weight of sugar with the substantial balance being water and optionally a flavor producing ingredient. The high amount of sugar solids speeds up the crystallization of the sugar in the solution during cooling and after the application of the sugar syrup to the food container. Also, because of the high degree of sugar content, it is not necessary to utilize certain additives to facilitate the adhesion of the sugar syrup to the cone. Thus, the higher concentrations of sugar do not require any additives but do require an effective mechanical means, such as for example vigorous agitation, for suspending the sugar in the supersaturated mixture and preventing crystallization before it is applied to the container.

A sugar syrup having a sugar content of about 70 to 79% by weight are somewhat easier to maintain but, as a practical matter, require the addition of a gum material which is necessary to help provide adhesion of the sugar solution to the food container. Thus, although in some cases, it is possible to obtain a good penetration with a sugar syrup having a sugar content of about 70 to 79% by weight, without the presence of a gum, such a penetration takes a long period of time with continuous spinning to prevent the settling of the dilute liquid syrup. Thus, a sugar syrup containing about 70 to 79% by weight of sugar advantageously contains about 0.1 to 2% by weight of a gum material with the substantial balance being water which optionally may include a flavor-producing substance. The preferred sugar syrup has a sugar content of 77 to 78% by weight and used with a vegetable gum.

A typical sugar which can be used in the barrier coating of the present invention is sucrose which can be obtained from cane sugar or beet sugar. This sugar can be used in the form of a standard granulated sugar or as a 10X or 12X special grind. It is also possible that lactose and dextrose can be used as the sugar component in the present invention. However, the expense of these sugars and the fact that they are not as sweet as sucrose makes them not as effective as vehicles for carrying flavor.

The gum additives which can be used in the present invention include both vegetable gums and cellulose gums which are effective

in helping the sugar slurry adhere to the wall of the food container. Suitable gums include sodium alginate, propylene glycol alginate, carrageenans, Xanthan gum, cellulose gums and modified cellulose gums such as hydroxy propyl methyl cellulose and hydroxy propyl cellulose. Combinations of gums also work effectively in the barrier coating of the present invention. Thus, for example, 0.5% by weight of sodium alginate and 1.0% by weight of Avicel (microcrystalline cellulose + carboxy methyl cellulose made by Hercules Corporation) work well together. Mixtures of Xanthan gum with either locust bean gum or guar gum appear to be particularly effective in that these mixtures appear to give more than a mere additive effect in facilitating the adherence of the barrier coating to the food container. The choice of the gum combination depends upon many variables such as drying time, thickness of the coating desired, texture of the coating, the particular flavor which is utilized and the like. For example, the Avicel alginate type coating provides a hard surface in direct contrast to the carrageenans which provide a softer type of coating. Also, propylene glycol alginate, which functions similarly as sodium alginate, has the additional advantage of working well in the presence of acid flavors.

Suitable flavors which can be utilized in the barrier coating composition of the present invention include the citric acid flavors such as orange, lemon, grapefruit, grape, and the like and non-acid flavors such as for example, banana, maple, and the like. If true or natural fruit flavors are utilized, in this case the fruit flavor inherently contains the necessary water content which is utilized in the barrier coating. However, if artificial flavors are utilized then both water and the artificial flavor must be added to make up the substantial balance of the barrier coating composition.

The following is a typical formulation of a barrier coating composition using a high sugar solids content but no gum or starch:

### Example 1

| | |
|---|---|
| Sugar | 84.41% by weight |
| Water | 14.89% by weight |
| Flavor | 0.66% by weight |
| Color | 0.04% by weight |

The following are typical formulations of a barrier coating composition utilized in the present invention wherein a gum is present in the composition to provide the desired adhesive effect.

### Example 2

| | |
|---|---|
| Sugar | 0.776 parts (77.6% by weight) |
| Water | 0.211 parts (21.1% by weight) |
| Carrageenan (Gelcarin D.G. - Marina Colloids Co.) | 0.001 parts (0.1% by weight) |
| Flavor | 0.006 parts (0.6% by weight) |
| Citric Acid Solution | 0.006 parts (0.6% by weight) |

### Example 3

| | |
|---|---|
| Sugar | 0.776 parts (77.6% by weight) |
| Water | 0.196 parts (19.6% by weight) |
| Cellulose gum (Avicel 611) | 0.016 parts (1.6% by weight) |
| Flavor | 0.006 parts (0.6% by weight) |
| 50% Citric Acid Solution | 0.006 parts (0.6% by weight) |

Using the identical water-sugar ratio as outlined above, various coating formulations have been tested with advantageous results utilizing sodium alginate at 2% by weight in the formulation of Example 2 and, in a separate example, Kappa and Iota carrageenans in an amount of 0.5% by weight in the formulation of Example 2.

Generally speaking, the sugar syrups discussed above are generally utilized in providing a barrier coating for food containers, particularly edible food containers which are adapted
to carry dessert-type foods such as ice cream products, frozen
flavored ice products, jello, pudding, and the like. However,
there are many flavors which can be incorporated into a barrier
coating for edible food containers for which sugar is not a
desirable ingredient. If, for example, the objective is to use
a container such as a cone as a completely edible container for
food products both solid and semi-liquid, other than dessert type
foods, it is desirable to make a barrier coating that is sugar-
free. Likewise, if the only objective is to provide a film
barrier on the edible container, colloids (gums) that have been
utilized in conjunction with the sugar can be used alone. It
should be noted here that the sugar syrups with the colloids
added thereto can perform a better moisture barrier than those
formed from sugar syrup alone.

Rye flavor, garlic flavor, onion flavor, and a variety of
other flavors can be added to a gum solution in order to provide
a suitable barrier coating for edible food containers. As a
rule of thumb, a solution designed to be made without sugar
generally has four times the gum concentration when compared to
a coating used in conjunction with sugar.

The following is exemplary of a formulation which can be
used to produce a sugar-free barrier coating.

<u>Example 4</u>

| | |
|---|---|
| Water | 96.0 parts (96%) |
| Low viscosity sodium alginate | 3.5 parts (3.5%) |
| Rye bread flavor | 0.5 parts (0.5%) |
| TOTAL | 100.00 parts |

The solution was flo-coated in the same manner as described
hereinbelow and drying was effected at a temperature of 225°F (107°C).

It has also been found to be advantageous to utilize a barrier coating comprising a mixture of a fat plus a flavor-producing material. This mixture, similarly as above can be flo-coated as defined in U.S. Patent 3,526,515.

The barrier coating, for example, a sugar solution, can be applied to an edible food container, for example, a cone, by any method which is effective for achieving the objects of the present invention, such as for example:

(1) The coating can be sprayed on the container with or without rotating the container during the coating operation. This procedure can create some problems in that there is the danger of missing some spots on the container as in the case of the chocolate droplets already described.

(2) The cone can be filled with a syrup and then inverted, allowing the syrup plus liquid to flow into a reservoir. This is referred to as the fill and dump technique.

(3) An appropriate amount of the barrier coating is deposited in the bottom of the container. The container is then placed in a mechanism which is rotated at a high speed forcing the liquid coating against the inside of the container. Any excess liquid which escapes from the top of the container runs back into a reservoir for reuse. This procedure can be identified as a flow coat procedure.

(4) The coating could also be applied by simply dipping either the outside of the container or the entire container into a bath of a barrier coating composition.

In all of the above procedures, the edible food containers were dried at a temperature of about 225-450°F (107-232°C).

Although all of the above coating procedures can be utilized in applying a sugar-containing barrier coat to the edible food containers of the present invention, the flow coat procedure was found to be particularly effective and is, in fact, the preferred method for applying the barrier coating to the container.

The present invention is also directed to a method and apparatus for applying a uniform coating of an edible, moisture proofing fat material or modified fat material to at least one surface of an edible food container.

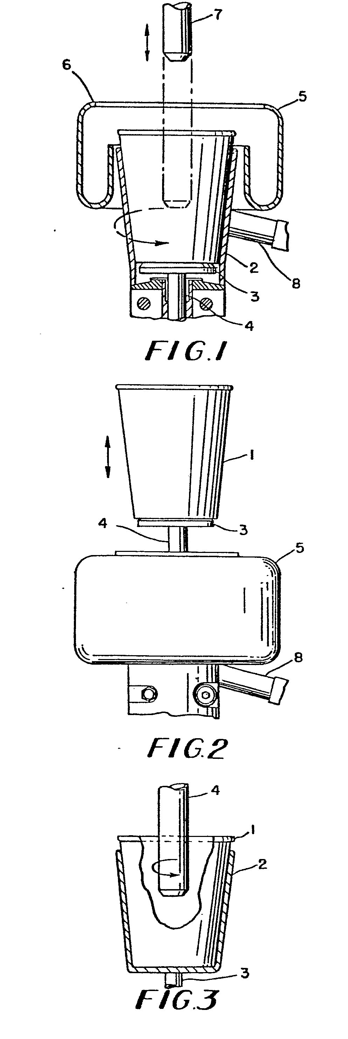

As noted hereinabove it was thought that fats could not be used as a barrier coating for edible food containers because the eating quality of the coated container would be adversely effected because of the unpleasant, waxy feel of the fat to the mouth. For example, when spraying containers with a fat material, a plurality of droplets contact the surface of the container, leaving a plurality of spaces disposed between the droplets. Thus in order to cover these spaces it is necessary to again spray the container causing the fat to cover the open spaces. However, this also produces multiple layers of fat on the previously deposited fat droplets. These globs of multiple layers of fat droplets produce an unequal layer of fat material which contributes to the waxy feel which is produced in the mouth. However, these problems are effectively eliminated by utilizing only the flo coat method when applying a fat coating to an edible food container. Thus by utilizing the flo coat method in combination with a fat material, a coating of great uniformity can be produced on the edible food container which cannot be achieved by other coating methods. By avoiding the formation of multiple layers of fat material on the surface of the edible food container, the unpleasant taste of excess fat produced by the deposition of multiple layers of fat can be eliminated. By flo coating is meant any method wherein the fat coating is introduced into the container and caused to rotate or swirl, for
example, by rotating the container at high speed, whereby the
container surface is uniformly coated with a single layer of
fat. Examples of this procedure are the flo-coating method of
Figs. 1 to 3 herein and the Flex-E-Fill method.

Enrobers are devices which are known to be effective in
coating flat surfaces. However the problems involved in coating
edible food containers with corners, rims and crevices where
fat could accumulate are completely different from those of
flat surfaces. By utilizing the flo-coating techniques, a
uniform coating can be applied to edible food containers without
such an accumulation.

When considering edible food containers for dessert-type
food products such as ice cream, jello, pudding, and the like,
a barrier coating in the form of a uniform, continuous film is
applied to the food container, such as for example, a molded
cone or a rolled sugar cone. Advantageously, the barrier
coating is applied to the inside surface of the edible food
container so as to protect the container from undue moisture
contributed by the food product which would otherwise be
absorbed by the food container. It can be understood that
where additional strength is desired, the outside surface of
the food container can also be provided with a barrier coating.

The type of flavors which can be utilized in the barrier
coating composition of the present invention depend on the
particular food product which is being dispensed by the container. With dessert-type foods the flavors can include the
citric acid flavors such as orange, lemon, grapefruit, grape,
and the like and non-acid flavors such as, for example, banana, maple, and the like. For non-dessert-type food products, a variety of other flavors can be added to the fat material, such. as, for example, rye flavor, garlic flavor, onion flavor, etc., depending on the particular food being dispensed.

According to the present invention the barrier coating, for example, a mixture of fat plus a flavor-producing material is applied to an edible food container, for example, a cone, by using the flo-coating technique wherein an appropriate amount of the barrier coating is first deposited in the bottom of the container. The container is then placed in a mechanism which is rotated at a high speed forcing the liquid coating against the inside of the container. Any excess liquid which escapes from the top of the container runs back into a reservoir for reuse. Advantageously, the flo-coating material is heated up to about 220°F (104°C), preferably about 160-220°F (71-104°C), depending upon the particular fat being utilized. After the flo-coating operation is completed, the coated food containers are discharged into either ambient conditions or into a cooling chamber depending on the particular fats being utilized, the packaging conditions and ambient conditions. Thus, for example, subsequent cooling may be desirable when processing under extreme summer time temperature conditions.

The present invention will become more fully understood from the detailed description given hereinbelow and the accompanying drawings which are given by way of illustration only, and thus are not limitative of the present invention and wherein:

Fig. 1 is a device used for flo-coating an edible food container with a barrier coating composition;

Fig. 2 is the device of Fig. 1 in a different position of operation;

Fig. 3 is an alternative device for achieving the flo-coat method of the present invention;

Fig. 4 shows a spray and spin apparatus and method for coating an edible food container with a sugar-containing barrier coating composition and

Fig. 5 shows a fill and dump apparatus and method for coating an edible food container with a sugar-containing barrier coating composition.

An apparatus which can be effectively utilized in conducting the flo-coat method of the present invention is shown in Figs. 1, 2 and 3 of the present application. Fig. 1 shows a food container 1, which in this case is a cone, disposed in a rotatable receptacle 2. The cone is supported by a platform 3 and a vertical post member 4. The platform 3 and the vertical post member 4 are adapted to move in the vertical direction independent of the rotation of the receptacle 2. The upper portion of the receptacle is provided with an overflow reservoir 5 which is adapted to retain excess coating material which is discharged from the food container during the coating operation. The reservoir is provided with an aperture 6 which permits the introduction of a nozzle 7 into the cup for loading the cup with the barrier coating material prior to the flo-coat operation. The reservoir 5 is also provided with a conduit means 8 for recycling the overflow coating material to the nozzle means 7 for reuse.

In operation, and specifically referring to Fig. 1, the food container 1 to be coated is introduced into the receptacle 2. Then the coating material is introduced into the food container through nozzle 7 up to a predetermined level. The receptacle containing the cup is then rotated at a high speed forcing the coating liquid up the inside of the container, and uniformly coating the entire inside surface of the cone. Any excess coating liquid escaping from the top of the cone runs into the reservoir 5 where it is collected and eventually recycled through a conduit 8 back to the feed nozzle 7. After the cone 1 has been uniformly coated on the inside thereof, it is removed from the receptacle tube through the aperture 6 provided in the reservoir 5 by the vertical movement of the platform 3 and the center post member 4 as shown in Fig. 2.

In an alternative embodiment of the apparatus of the present invention, the coating liquid can be forced up the inside of the container by the rotation of a mandril centrally disposed within the food container. Thus, in this embodiment, rather than rotating the receptacle which holds the food container, the coating material can be introduced into the food container and then the mandril can be rotated, thereby achieving the same result. In this latter embodiment, the nozzle which is used to introduce the flo-coating material into the food container can also function as the rotating mandril to achieve the desired internal coating effect.

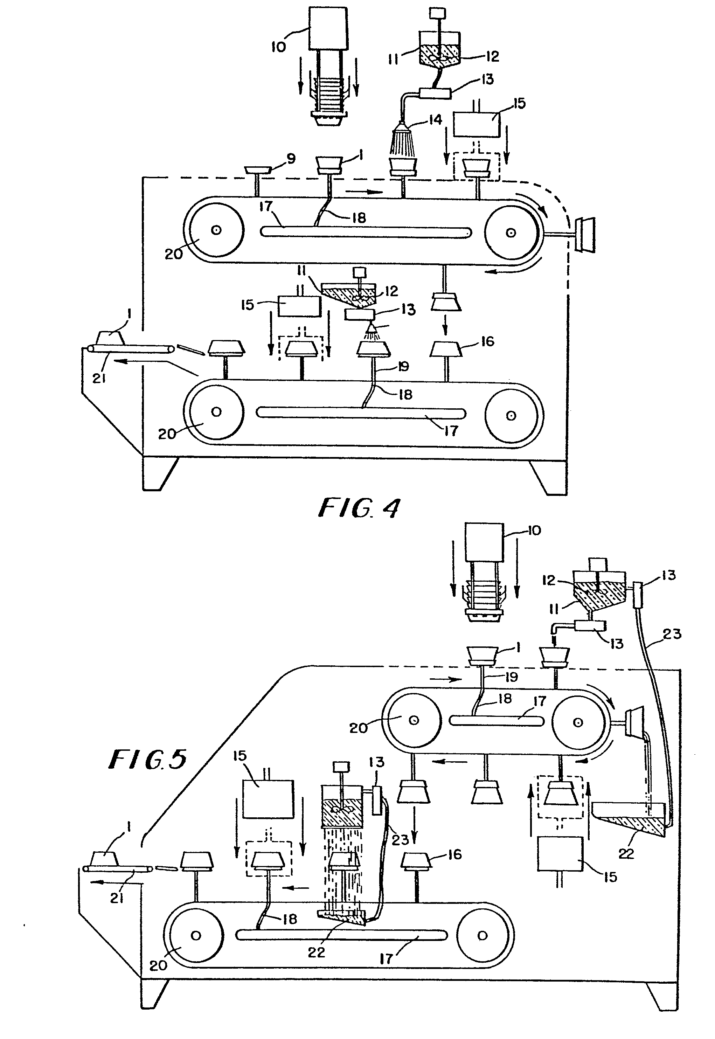

Fig. 4 shows the spray and spin method and apparatus for applying the barrier coat to an edible food container as defined by the present invention. In this system a plurality of vacuum pots 9 are mounted on a first conveyor system 20 provided with a vacuum system comprising a vacuum manifold 17 and vacuum lines 18 and 19 for producing a vacuum in the vacuum pots 9. A food container dispenser, for example, a cup dispenser 10, a coating reservoir 11 and a shroud heater 15 are positioned along the conveyor system to effect the dispensing and coating of the inside surface of food cups. Thus, as the vacuum pot 9 is conveyed beneath the cup dispenser 10, a food cup 1 to be coated is discharged into the vacuum pot where it is held in position by the vacuum produced by the vacuum manifold 17. The internal surface of the cup is then coated with a heated barrier coating from a reservoir 11, utilizing a pump 13 which is connected to a spray device 14 for spraying the internal surface of the cup. A stir 12 is rotatably disposed within the reservoir for maintaining the barrier coating material in a uniform state. After the cup is internally coated, it is conveyed to the drying stage of the process where a heated shroud is dropped over the container for uniformly heating and drying the same. During this drying step the cup is rotated so that the coating material can be uniformly distributed along the inside surface of the cup.

A second conveyor system 20 provided with a vacuum system comprising a vacuum manifold 17 and the vacuum lines 18 and 19 is disposed below the first conveyor system. The second conveyor system contains a plurality of cup supports 16 for receiving an inverted cup from the first conveyor system. Thus, after the internal coating on the cup has been sufficiently dried in the drying stage of the first conveyor system, the shroud 15 is raised and the vacuum pot containing the internally coated cup is conveyed through a distance which permits further drying under ambient conditions to an inverted position above the second conveyor system containing the cup supports 16. Each cup support has a shape which conforms with the internal surface of the cup and operatively communicates with the vacuum system. As the inverted cup is positioned over a cup support, the vacuum on the vacuum pot is discontinued causing the cup to be effectively transferred from the vacuum pot to the cup support 16. The vacuum system associated with the cup support can then be initiated to hold the cup firmly to the cup support. Of course the vacuum produced in the cup support can be initiated at the same time as the vacuum is discontinued on the vacuum pot thereby facilitating the transfer of the cup from the inverted vacuum pot of the first conveyor system to the cup support of the second conveyor system. The cup support containing the inverted cup disposed thereon is then transferred to a coating station where the outside surface of the cup is coated by spraying, utilizing a coating reservoir, a pump and a spray device in a similar manner as in the coating of the internal surface of the cup. The coated cup is then conveyed to a drying station where the external surface of the cup is dried while the cup is spinning, utilizing a shroud heater.in the same manner as described above. After drying, the shroud is raised and the cup is further dried and cooled in ambient air before being removed from the system by a conveyor 21.

Fig. 5 shows the fill and dump method and apparatus for applying a barrier coat to an edible food container as defined by the present invention. The fill and dump system of Fig. 5 has many similar features to the spray and spin system of Fig. 4 with the main difference being that the cup to be internally coated is filled with the barrier coating material to coat the internal surface of the cup and then the contents of the cup is dumped into a reservoir 22 from where it is recycled by conduit 23 and pump 13 back to the coating reservoir. The internally coated cup is spin dried utilizing a heated overspin shroud in the same manner as described above. The external surface of the cup is coated with an enrober utilizing the coating material stored in the reservoir 11. The excess coating material is collected in the reservoir 22 disposed below the cup and recycled by pump 13 through conduit 23 back to the reservoir 11. It is readily apparent that in conducting the spray and spin process of Fig. 4 and the fill and dump process of Fig. 5 either the inside or the outside of the cup could be selectively coated, by utilizing only a portion of the overall process.

Alternative to utilizing a sugar solution as discussed hereinabove, sugar per se was melted at about 275°F (135°C), and then processed by the three methods discussed above, that is, the spraying method of system (1), the fill and dump method of system (2) and the flo-coating method of system (3). The obvious problem encountered in using only sugar is that the hot sugar syrup requires complicated heating mechanisms for recovering the surplus sugar and for retaining the temperature during the process to prevent crystallization. Given the appropriate engineering input, it is conceivable that a complete heating system could be developed so as to handle molten sugar, but as a practical reality, the cleanup and maintenance of the system would present almost insurmountable obstacles. In addition, at 275°F (135°C) it is very difficult to find flavors that will not volatilize so that, even if, arguendo, it would be possible to process a sugar coating per se on the inside of an edible container, the sugar would have a relatively bland flavor.

As discussed hereinabove, when using a sugar syrup with a sugar content of 70 to 79% by weight, a gum is advantageously added to the coating composition to facilitate the adhesion of the coating to the surface of the food container. In this regard, starches and modified starches can also be used as an additive to a sugar slurry in place of the gums as recited hereinabove for achieving the same purpose.

The following are typical formulations wherein starch is used in place of a gum. As will be noted, considerably more starch is needed than in a comparable sugar-gum system. However, when starches are used, they contribute solids to the mixture so that the total amount of sugar is therefore reduced as illustrated:

### Example 5

| | | |
|---|---|---|
| Sugar | 68 parts | (68% by weight) |
| Film Set Start (National Starch Co.) | 15 parts | (15% by weight) |
| Flavor and Color | 1 part | ( 1% by weight) |
| Water | 16 parts | (16% by weight) |

### Example 6

| | | |
|---|---|---|
| Sugar | 73 parts | (73% by weight) |
| Crisp Film Starch | 5 parts | ( 5% by weight) |
| Flavor and Color | 1 part | ( 1% by weight) |
| Water | 21 parts | (21% by weight) |

### Example 7

| | | |
|---|---|---|
| Sugar | 63 parts | (63% by weight) |
| Starch | 20 parts | (20% by weight) |
| Water | 16 parts | (16% by weight) |
| Flavor and Color | 1 part | ( 1% by weight) |

Advantageously the starches are used in an amount of about 5 to 20% by weight, based on the total weight of the coating composition.

Food containers which have been flo-coated on the interior surface thereof can also be coated, for example, spray coated, on the exterior surface thereof.

Using vigorous agitation to prevent crystallization when handling small batches of a sugar syrup and by using other mechanical aids to maintain the integrity of the mixture, flo-coating can be effectively utilized to provide a hard, dry coating on the edible food container. After the containers have been flo-coated, they are placed in an oven which is held at a temperature above the boiling point of the concentrated sugar solution. Since the highest temperature at which a sugar syrup of 81 Brix (maximum anticipated concentration) will boil at atmospheric pressure is 230°F (110°C), the oven is set at 250°F (121°C) which is the maximum temperature at which the flavor can be maintained. The drying time varies with variations in air velocity, so that the drying time can range from 30 seconds to as high as 30 minutes with an optimum time period being in the one to two minutes range.

As stated hereinabove, if a harder film is desired, the alginate gum is used in the coating composition. The flo-coated containers can be also recoated or sprayed with a 2% solution of calcium chloride which cross-links the alginate into a harder film.

The fats or blends of fats which can be utilized in the present invention include any food grade fats, either natural or hydrogenated, which are solid at room temperature and provide an effective barrier to moisture penetration and wetting, such as for example, fats having a melting point range of up to about 160°F (71°C). Typically, these fats are solid glyceryl esters of higher fatty acids ranging from $C_8$ to $C_{20}$, preferably $C_{12}$ to $C_{18}$. Examples of such acids are caprylic acid, lauric acid, palmitic acid, stearic acid, eicosadienoic acid and the like. Suitable food grade fats can be made from rape seed oil, hydrogenated vegetable oil, such as for example cotton seed oil, and the like. The fats of the present invention can also be modified by distillation alone, distillation and acetylation or any other method to produce modified fats which are effective for the purposes of the present invention. Furthermore, fat-containing coating such as chocolate can also be used as the fat coating of the present invention.

Examples of suitable fats include Duratex, which is a food grade powdered lubricant made from hydrogenated cotton seed oil having a capillary melting point of 136 to 144°F (58-62°C); Myvacet (5-07) which is a fat which has been modified by acetylation to form an acetylated monoglyceride having a melting point of 106 to 115°F (41-46°C); Myvacet (7-70K) which is also a modified fat having a melting point of 99 to 104°F (37-40°C); Aratex which is a hydrogenated vegetable fat having a melting point of 115 to 119°F (46-48°C); various emulsifiers such as Span 60 and Tween 60, and the like. The fats can be either hydrophobic or hydrophylic in nature. In the latter case the moisture is picked up by the fat coating but not transmitted to the edible food containers.

The superior moisture resistant properties of edible food containers coated with a fat as defined by the present invention are demonstrated by the following comparative examples.

A leak test was conducted comparing uncoated molded white cake cones (KC3 tart shells), cake cones provided with a candy coating, cake cones flo coated with a single fat coating and cake cones flo coated with a double fat coating. In the leak test tap water at 60°F (15,5°C) was placed into the coated and uncoated cones and the time required for the water to begin to leak through the cone was observed with the following results:

| Type of Coating | Leak Time (min) |
|---|---|
| 1.  Uncoated | 0.6 |
| 2.  Candy Coating (mixture of sugar, coloring, flavor & water) | |
|     Raspberry | 0.8 |
|     Vanilla | 1.6 |
| 3.  Single Coating of Fat | |
|     Duratex | 26.6 |
|     Aratex | 7.2 |
| 4.  Double Coating of Fat | |
|     Myvacet | 24.5 |
|     Duratex | 29.6 |
|     Aratex | 17.9 |

In an additional test, after the fat coating was applied, the coated cones were placed in an air convection oven at 140°F (60°C) for one hour to simulate an extreme storage or shipping environmental condition. The leak test was again performed with the following results:

| Type of Coating | Leak Time (min) |
|---|---|
| 1.  Single Coat | |
|     Duratex | 16.5 |
|     Aratex | 12.9 |
| 2.  Double Coat | |
|     Myvacet | 18.8 |
|     Duratex | 13.8 |
|     Aratex | 13.0 |

The above tests show that the fat coating provided a significant barrier to liquid penetration of the edible container.

In the flo coating of the KC3 shells or other edible food containers, the coating operation is advantageously carried out at room temperature utilizing a fat which is heated to a temperature above its melting point. Thus the temperature to which the fat is heated depends upon the particular fat which is utilized as the coating material. The coated containers are generally permitted to slowly cool at ambient temperature, but if a more accelerated solidification and cooling of the fat coating is desired, the coated food containers can be placed in a cooling chamber.

Claims:

1. A sugar syrup barrier coating composition for application to at least the interior surface of an edible food container which comprises a sugar solution having a sugar content of at least 50% by weight.

2. The sugar syrup barrier coating composition of claim 1, wherein the sugar content is at least 70% by weight.

3. The sugar syrup barrier coating composition of claim 2 wherein the sugar content is about 80 to 86% by weight with the substantial balance being water.

4. The sugar syrup barrier coating composition of claim 2, wherein the sugar content if from 70 to about 79% by weight with the substantial balance including water, and an additive to facilitate the adhesion of the coating to the edible food container.

5. The sugar syrup barrier coating composition of any of claims 1-4, wherein the coating composition further contains a flavor-producing material.

6. The sugar syrup barrier coating composition of claim 4, wherein the additive is a vegetable gum, a cellulose gum or a modified cellulose gum selected from the group consisting of sodium alginate, Avacel, alginate, propylene glycol alginate, carrageenans, Xanthan gum, hydroxy propyl methyl cellulose and hydroxypropyl cellulose.

7. The sugar syrup barrier coating composition of claim 6, wherein when Xanthan gum is utilized, it is combined with an additional gum selected from the group consisting of locust bean gum and guar gum.

8. The sugar syrup barrier coating composition of claim 6, wherein the gum is present in an amount of about 0.1 to 2% by weight based on the weight of the coating composition.

9. The sugar syrup barrier coating composition of claim 4, wherein the additive is a starch which is present in an amount of 5 to 20% by weight based on the weight of the coating composition.

10. The sugar syrup barrier coating composition of any of claims 4-9, wherein the sugar content is 77 to 78% by weight.

11. An edible food container provided with a sugar syrup barrier coating composition according to any of claims 1-10 on at least the internal surface thereof.

12. The edible food container of claim 11 which contains a dessert food product such as ice cream.

13. A method of processing edible food containers for use with a food product which comprises applying a barrier coating composition according to any of claims 2-10 to at least the interior surface of the edible food container, in an amount sufficient to produce a continuous film of said barrier coating composition on said surface and drying the coated edible food container at a temperature of about 225 to 450°F (107-232°C).

14. The method of claim 13, wherein the barrier coating composition is applied by

a) spraying the edible food container with the barrier coating composition or

b) filling the edible food container with the barrier coating composition and then dumping the contents from said container.

15. A method of processing an edible food container for use with a food product which comprises applying a barrier coating composition to the interior surface of the edible food container in an amount sufficient to produce a continuous film of said barrier coating composition on said surface, said barrier coating composition being applied by introducing a suitable amount of said composition into the edible food container and then forcing the coating composition up the inside surface of the container.

16. The method of claim 15 wherein either the edible food container or the barrier coating composition within the container is rotated to force the barrier coating composition up the inside surface of the container.

17. The method of claim 15 or 16 wherein the excess coating composition escapes from the top of the container and is recovered for reuse.

18. The method of any of claims 15-17 wherein the barrier coating composition comprises a sugar solution having a sugar content of at least about 70% by weight and the coated edible food container is dried at a temperature of about 225-450°F (107-232°C).

19.   A continuous method of applying a coating material to an edible food container for use with a food product which comprises

- spraying the internal surface of the food container with the coating material

- drying the coating material while spinning the food container to insure a uniform distribution of the coating material on the internal surface of the food container,

- optionally inverting the food container to expose the external surface thereof,

- spraying the external surface of the food container with the coating material, and

- drying the coating material while spinning the food container to insure a uniform distribution of the coating material in the external surface of the food container.

20.   A continuous method of applying a coating material to an edible food container for use with a food product which comprises

- filling the edible food container with the coating material to coat the internal surface thereof

- removing the coating materials from the edible food container

- drying the coating material while spinning the food container to ensure a uniform distribution of the coating material on the internal surface of the food container,

- coating the external surface of the food container with the coating material, and

- drying the coating material while spinning the food container to insure a uniform distribution of the coating material on the external surface of the food container.

21. The method of claim 20 wherein the coating material is removed by inverting the edible food container to dump the coating material therefrom.

22. The method of any of claims 19-21 wherein a plurality of vacuum pots are disposed on a first conveyor system and the edible food containers are sequentially dispensed into the vacuum pots where they are held in position by a vacuum while they are internally coated and spun-dried.

23. The method of claim 22 wherein a plurality of container supports are disposed on a second conveyor system positioned below the first conveyor system, and the food containers are transferred from the vacuum pot of the first conveyor system to the container support of the second conveyor system by rotating the first conveyor system to invert the vacuum pot and associated food container to a position above a container support on the second conveyor system and releasing the vacuum on the vacuum pot.

24. The method of claim 22 wherein a vacuum is applied to the container support for holding the cup thereto in an inverted position.

25. The method of claim 24 wherein the coating material dumped from the food container is recycled for further use.

26. An apparatus for providing a barrier coating composition on the interior surface of an edible food container which comprises:

- a receptacle (2) for holding an edible food container;

- means (7) for introducing the coating composition into the edible food container to be provided in said receptacle, to a predetermined level;

- means for rotating the coating composition within the edible food container to substantially, uniformly coat the interior surface of said container with said coating composition; and

- means (3, 4) for discharging the coated edible food container from the receptacle.

27. The apparatus of claim 26, further including an overflow recovery container (5) operatively associated with the upper portion of the receptacle (2) for recovering excess coating composition which is discharging from the upper portion of the edible food container during the coating operation.

28. The apparatus of claims 26 or 27 wherein the means for rotating the coating composition comprises means for rotating the receptacle (2).

29. The apparatus of claim 26 or 27 wherein the means for rotating the coating composition comprises a mandril means and means for rotating said mandril means, said mandril means being adapted to move into and out of the coating composition disposed in the edible food container.

30. The apparatus of claim 29 wherein the mandril means also functions as the means for introducing the coating composition into the edible food container.

31. A continuous apparatus for providing a barrier coating composition on the interior and exterior surfaces of an edible food container which comprises

- a first conveyor system (20) containing a plurality of container receiving stations (9),

- a second conveyor system (20) containing a plurality of container receiving stations (16), said second conveyor being disposed below said first conveyor system,

- a vacuum system (17, 18, 19) operatively associated with the container receiving stations of the first and second conveyor systems,

- a dispensing means (10) for sequentially placing the edible food containers in the container receiving stations of the first conveying system,

- coating means (11, 13, 14) operatively associated with the first conveyor system for coating the internal surface of the edible food container with the barrier coating composition,

- means operatively associated with the first conveyor system for spinning and drying the barrier coating composition in the internal surface of the edible food container,

- means for rotating the first conveyor system to invert the edible food container to a position above a container receiving means disposed on the second conveyor system and transferring said edible food container to said container receiving means on the second conveyor system in an inverted position,

- coating means operatively associated with the second conveyor system for coating the external surface of the edible food containers with the barrier coating composition, and

- means operatively associated with the second conveyor system for spinning and drying the barrier coating composition on the external surface of the edible food container.

32. The apparatus of claim 31 wherein the coating means is a spray means (14).

33. The apparatus of claim 31 wherein the coating means comprises a system for filling the edible food containers with the barrier coating composition and dumping the excess into an overflow container (22) for recycling.

34. A method of processing an edible food container for use with a food product which comprises applying a moisture-resistant, barrier coating composition of a food grade fat material to at least the interior surface of the edible food container in an amount sufficient to produce a continuous, uniform film of said barrier coating composition on said surface, said barrier coating composition being applied by a flo-coating technique wherein an effective amount of said composition is introduced into the edible food container and the coating composition is then forced up the inside surface of the container.

35. The method of claim 34 wherein the edible food container or the barrier coating composition within the container is rotated to force the barrier coating composition up the inside surface of the container.

36. The method of claim 35 wherein the excess coating composition escapes from the top of the container and is recovered and recycled for reuse.

37. The method of any of claims 34-36 wherein the barrier coating composition is heated to the melting point of the fat and the application of the barrier coating composition to the container is conducted at ambient temperature.

38. The method of claim 37 wherein the coated containers are cooled subsequent to the coating operation.

39. The method of any of claims 34-38 wherein the food grade fat material includes modified fats and mixtures thereof.

40. The method of claim 39 wherein the food grade fat material is selected from the group consisting of Myvacet, Duratex and Aratex.

41. The method of any of claims 34-40 wherein the food grade fat material is a chocolate coating.

42. The method of any of claims 34-41 wherein the fat material contains a flavor producing additive.

43. An edible food container provided with a moisture resistant barrier coating composition having a substantially uniform thickness on at least the internal surface thereof, said coating composition comprising a food grade fat, food grade modified fats or mixtures thereof.

44. The edible food container of claim 43 wherein the coating composition further contains a flavor producing material.

45. The edible food container of claim 43 or 44 which contains a dessert-type food product such as ice cream or a non-dessert-type food product such as Chinese or Mexican food.

46. The edible food container of any of claims 43-45 wherein the food grade fat is a chocolate coating.

0045522

1 / 2

FIG.1

FIG.2

FIG.3

FIG. 4

FIG.5